# EUROPEAN PATENT APPLICATION

(11) **EP 4 459 529 A1**
(43) Date of publication of application: **06.11.2024**
(21) Application number: 24174191.7
(22) Date of filing: 03.05.2024
(51) Int. Cl.: G06Q 10/0639, G06Q 50/02, A01K 45/00, A01M 31/00, G10L 17/26, G10L 25/51, G10L 15/16, G10L 15/08

(54) **A METHOD AND SYSTEM FOR CONVERTING BIOACOUSTIC SOUND SIGNALS FOR AN AREA OF LAND INTO AN INDICATOR OF BIODIVERSITY FOR PUBLIC DISPLAY AND PRIVATE NOTIFICATION**

(30) Priority: 03.05.2023 GB 202306562
(71) Applicant: Chirrup Ltd, Chichester Sussex PO20 7EQ (GB)
(72) Inventor: YOUNG, Conrad, Chichester, PO20 7EQ (GB); GRIFFITHS, Jacob, Chichester, PO20 7EQ (GB); JAMINA, Sonja, Chichester, PO20 7EQ (GB); VASILIC, Marko, Chichester, PO20 7EQ (GB)
(74) Representative: White, Andrew John

(57) **Abstract**

The present disclosure relates to a method and system for converting bioacoustic sound signals for an area of land into an indicator of biodiversity for public display and private notification. An aspect of the disclosure provides a method for monitoring the biodiversity of an area, the method comprising: obtaining one or more recording of bird vocalisation in the area; identifying, using a trained machine learning model, each species of bird in the one or more recordings of bird vocalisation in the area and thereby obtaining an indication of each species of bird in the area; outputting an indication of biodiversity of the area based on the indication of each species of bird in the area; and providing an alert or other notification in the event that the indication of biodiversity is above a selected threshold.

## Description

### Field of the invention

The present disclosure relates to a method and system for converting bioacoustic sound signals for an area of land into an indicator of biodiversity for public display and private notification , in particular relating to monitoring the biodiversity of birds.

### Background

Recognising the ecological crisis facing the planet, with 70% of wildlife populations declining since the 1970s, the Global Biodiversity Framework (GBF) was agreed in December 2022 by 188 governments.

The GBF was also endorsed by many companies and financial institutions, including the commitment to "regularly monitor, assess, and transparently disclose the risks, dependencies and impacts on biodiversity through operations, supply and value chains and portfolios".

Simultaneously, the Taskforce on Nature-related Financial Disclosure, asset managers representing $20 trillion of shares and bonds in public companies, is encouraging the sector to make net positive, no net loss, or other nature-related commitments in their supply chains. Furthermore, myriad investors have increased investment in the sustainability and biodiversity space.

Accordingly, monitoring biodiversity has scientific, environmental, and financial importance.

### Summary of the invention

Aspects of the invention are as set out in the independent claims and optional features are set out in the dependent claims. Aspects of the invention may be provided in conjunction with each other and features of one aspect may be applied to other aspects.

An aspect provides a method for monitoring the biodiversity of an area, the method comprising: obtaining one or more recording of bird vocalisation in the area; identifying, using a trained machine learning model, each species of bird in the one or more recordings of bird vocalisation in the area and thereby obtaining an indication of each species of bird in the area; outputting an indication of biodiversity of the area based on the indication of each species of bird in the area; and providing an alert or other notification in the event that the indication of biodiversity is above a selected threshold.

Providing an alert or other notification in the event that the indication of biodiversity is above a selected threshold may for example comprise displaying a warning at an entrance to farmland, woodland or other geographical areas (such as nature reserves) in the event that the indication of biodiversity is above a selected threshold. In other words, this alert or notification may be in the form of a public display.

For example, the output can be turned into a signal which can be displayed on an electronic (or other) sign or display at entrances to farmland or other geographical areas to warn the public and other visitors to not enter, or otherwise take precautions, as they are in the vicinity of a high biodiversity area, and/or at a time of peak biodiversity activity. Advantageously, this enables farms or other landowners to signal to visitors that they should not enter during periods of peak wildlife/biodiversity activity and, in so doing, zones and times of peak breeding birds and other active wildlife will be protected from anthropogenic disturbance.

It will be understood that in some examples, displaying a warning at an entrance to farmland or other geographical area such as woodland in the event that the indication of biodiversity is above a selected threshold, is optional and that a physical warning may not need to be displayed or no warning at all provided. In some examples the warning may be a virtual warning or notification, for example a user may be notified as an alert or other notification that the indication of biodiversity is above a selected threshold. For example, the alert or notification may be on a computing or mobile device, for example on an app running on a smart phone or tablet. The alert or notification may be provided to the landowner, and/or other stakeholders such as the Wildlife Trust^{®} or Environment Agency^{®}. In this case the alert or notification may be in the form of private notification. This may enable farmers and/or other landowners or stakeholders to take precautions, for example by erecting physical signs or barriers to prevent or inhibit the access of visitors.

Advantageously, determination of biodiversity in an area may be determined using the method thereby addressing the needs set out in the background above. The method can be executed without the notice of the birds and without harming the birds, thereby advantageously providing a determination which is non-invasive and non-destructive.

The method does not require a human user to make the determination of biodiversity in the area which has a number of advantages. The determination utilises a trained machine learning model which may make more accurate determinations of the number of species in an area (and therefore more accurate and objective determinations of biodiversity in the area) and may remove the related expense of employing a human to identify species in the area and to make a subsequent determination of biodiversity in the area.

The method may comprise identifying, using a trained machine learning algorithm, an indication of the richness of an entire taxonomic group of organisms (such as birds) in the area, which may be based on the number of distinct species and optionally the trophic level that these species represent; and, outputting an indication of general biodiversity of the area. The output indication of biodiversity in an area may be an indication of the general biodiversity of the area.

The method may comprise identifying, using a trained machine learning algorithm, the number of individual birds of each species of bird in the one or more recordings of bird vocalisation in the area, and thereby obtaining an indication of the abundance of each species of bird; and, outputting an indication of biodiversity of the area further based on the abundance of each species of bird in the area. In such examples the area may be an assemblage of species derived from a plurality of different areas. The indication of general biodiversity may also be based on the abundance of each species of bird in the area.

Obtaining an indication of the richness of an entire class of organisms may comprise obtaining an indication of the richness of different trophic levels of the class of organism, and wherein outputting an indication of the general biodiversity comprises outputting an indication of the biodiversity of each trophic level.

As will be described below, it will be understood that recordings may be bioacoustics or ecoacoustic recordings. The recordings may comprise both bird vocalisation and sounds produced by other animals (either terranean or subterranean).

In some examples the method may comprise obtaining an indication of the richness of a plurality of different classes or groups of organisms. In such examples the indication of general biodiversity of the area may be based on the indication of the richness of the plurality of different classes or groups of organisms, such as birds or soil-based organisms, or other organisms such as bats and farm livestock.

Each of the one or more recordings may have a given duration. Advantageously, the duration may be selected to be long enough to obtain enough data (e.g. audible bird vocalisations) but short enough as to prevent slow transmission and/or slow processing (e.g. by the trained machine learning model) of the recordings.

Each of the one or more recordings may be recorded at a selected time of day. Advantageously, the recordings may occur at regular intervals to increase the number of species of birds audible in the recording, for example, some species of bird may be more active at different times of day.

Optionally, the method may comprise determining a change in the indication of biodiversity in the area based on a proposed change to the area. Advantageously, the biodiversity of the area may be maintained or varied in a desirable manner e.g. without the costly need for trial and error.

Another aspect provides a system for monitoring biodiversity of an area, the system comprising a recording device; and a computing device. The recording device is configured to obtain one or more recordings of bird vocalisation in the area. The computing device is configured to: identify, using a trained machine learning model, each species of bird in the one or more recordings of bird vocalisation in the area and thereby obtaining an indication of each species of bird in the area; output an indication of biodiversity of the area based on the indication of each species of bird in the area; determine whether the output indication of biodiversity of the area is above a selected threshold, and in the event that the indication of biodiversity is above the selected threshold, to provide an alert or notification.

The system may comprise a display, for example a remote display on an entrance to farmland, woodland or other geographical area. The alert may be provided on the display. For example, the alert is a warning to visitors not to enter the area.

In some examples the warning may be a virtual warning or notification, for example a user may be notified as an alert or other notification that the indication of biodiversity is above a selected threshold. For example, the alert or notification may be on a computing or mobile device, for example on an app running on a smart phone or tablet. The alert or notification may be provided to the landowner, and/or other stakeholders such as the Wildlife Trust or Environment Agency. This may enable farmers and/or other landowners or stakeholders to take precautions, for example by erecting physical signs or barriers to prevent or inhibit the access of visitors.

The computing device may be configured to: obtain an indication of the richness of an entire class of organisms in the area based on the indication of each species of bird in the area; and, output an indication of the general biodiversity of the area based on the indication of richness of the entire class of organisms in the area; wherein the indication of biodiversity is an indication of the general biodiversity of the area.

The computing device may be configured to obtain an indication of the richness of an entire class of organisms comprises obtaining an indication of the richness of different trophic levels of the class of organism. Outputting an indication of the general biodiversity may comprise outputting an indication of the biodiversity of each trophic level.

The computing device may be configured to identify, using the trained machine learning model, the number of birds of each species of bird in the one or more recordings of bird vocalisation in the area, and thereby obtaining an indication of the abundance of each species of bird; and, output an indication of biodiversity of the area further based on the indication of the abundance of each species of bird in the area.

An aspect provides a method of monitoring biodiversity, the method comprising: obtaining an indication of biodiversity of a first area based on the number of different species of birds identified in the first area in a selected time window; obtaining an indication of biodiversity of a second area based on the number of different species of birds identified in the second area in the selected time window; assigning a first biodiversity score to the first area and a second biodiversity score to the second area based on a comparison between the indication of biodiversity in the first area and the indication of biodiversity in the second area.

It will be understood that the selected time windows may be at the same time of day, week, month or even year - for example to obtain a comparison of the indication of biodiversity over the course of weeks, months, a season or from year to year.

Advantageously, determination of relative biodiversity of two areas may be determined using the method thereby addressing the needs set out in the background above. The method can be executed without the notice of the birds and without harming the birds, thereby advantageously providing a determination which is non-invasive and non-destructive.

The method does not require a human user to make the determination of biodiversity in the areas which has a number of advantages. The determination utilises a trained machine learning model which may make more accurate determinations of the number of species in the areas (and therefore more accurate and objective determinations of biodiversity in the areas) and may remove the related expense of employing a human to identify species in the areas and to make a subsequent determination of biodiversity in the areas.

The first area may have one or more attribute; the second area may have one or more attribute; wherein at least one of the one or more attributes of the first area may be similar to at least one of the one or more attributes of the second area.

At least one of the one or more attributes of the first area may be identical to at least one of the one or more attributes of the second area.

The one or more attributes may comprise attributes selected from the list of: latitude and longitude; altitude of the area (e.g., height above sea level); average temperature of the area; average rainfall; the hectarage (i.e. the surface area) of the area; the region in which the area is located (e.g., which town, county, province, country, etc.); the soil type of the area (e.g., clay, sandy, silt, loam, peat, chalk, etc.); presence and area of water, such as percentage of the area which is open water; the water sources in the area (e.g., marsh, pond, lake, ocean, stream, river, etc.); linear extent of water courses / ditches; presence and area of woodland/forest, such as the percentage of the area which is forest; linear extent of hedgerow; use of agrichemical and/or organic inputs; the usage of the area (e.g. livestock use and/or type (e.g., dairy farming, beef farming, pork farming, chicken farming,), crop farming (e.g., grazing, barley, potatoes, apples)); stocking densities; environment management schemes being applied to the area.

Advantageously, comparing areas with one or more similar attribute provides meaningful comparisons because the similar attributes are act as control variables.

The method may comprise: obtaining an indication of biodiversity of a first area based on the number of different species of birds identified in the first area in a selected time window, which may comprise: obtaining one or more recording of bird vocalisation in the area in the selected time window; identifying, using a trained machine learning model, each species of bird in the one or more recordings of bird vocalisation in the first area and thereby obtaining an indication of each species of bird in the first area.

The method may comprise: obtaining an indication of biodiversity of a second area based on the number of different species of birds identified in the second area in a selected time window, which may comprise: obtaining one or more recording of bird vocalisation in the second area in the selected time window; identifying, using a trained machine learning model, each species of bird in the one or more recordings of bird vocalisation in the second area and thereby obtaining an indication of each species of bird in the second area.

It will be understood that the selected time windows may be at the same time of day, week, month or even year - for example to obtain a comparison of the indication of biodiversity over the course of weeks, months, a season or from year to year.

An aspect of the disclosure provides a method of monitoring biodiversity, the method comprising: obtaining an indication of biodiversity of a first area based on the number of different species of birds identified in the first area; obtaining an indication of biodiversity of a second area based on the number of different species of birds identified in the second area; wherein; the first area has one or more attribute; the second area has one or more attribute; wherein at least one of the one or more attributes of the first area is similar to at least one of the one or more attributes of the second area; assigning a first biodiversity score to the first area and a second biodiversity score to the second area based on a comparison between the indication of biodiversity in the first area and the indication of biodiversity in the second area.

Advantageously, determination of relative biodiversity of two areas may be determined using the method thereby addressing the needs set out in the background above. The method can be executed without the notice of the birds and without harming the birds, thereby advantageously providing a determination which is non-invasive and non-destructive.

The method does not require a human user to make the determination of biodiversity in the areas which has a number of advantages. The determination utilises a trained machine learning model which may make more accurate determinations of the number of species in the areas (and therefore more accurate and objective determinations of biodiversity in the areas) and may remove the related expense of employing a human to identify species in the areas and to make a subsequent determination of biodiversity in the areas.

At least one of the one or more attributes of the first area may be identical to at least one of the one or more attributes of the second area.

The one or more attributes may comprise at least one attribute selected from the list of: latitude and longitude; altitude of the area (e.g., height above sea level); average temperature of the area; average rainfall; the hectarage (i.e. the surface area) of the area; the region in which the area is located (e.g., which town, county, province, country, etc.); the soil type of the area (e.g., clay, sandy, silt, loam, peat, chalk, etc.); presence and area of water, such as percentage of the area which is open water; the water sources in the area (e.g., marsh, pond, lake, ocean, stream, river, etc.); linear extent of water courses / ditches; presence and area of woodland/forest, such as the percentage of the area which is forest; linear extent of hedgerow; use of agrichemical and/or organic inputs; the usage of the area (e.g. livestock use and/or type (e.g., dairy farming, beef farming, pork farming, chicken farming,), crop farming (e.g., grazing, barley, potatoes, apples)); stocking densities; environment management schemes being applied to the area.

Advantageously, comparing areas with one or more similar attributes provides meaningful comparisons because the similar attributes are act as control variables.

The method may comprise: obtaining an indication of biodiversity of a first area based on the number of different species of birds identified in the first area in a selected time window, which may comprise: obtaining one or more recording of bird vocalisation in the area in the selected time window; identifying, using a trained machine learning model, each species of bird in the one or more recordings of bird vocalisation in the first area and thereby obtaining an indication (such as a list) of each species of bird in the first area.

The method may comprise: obtaining an indication of biodiversity of a second area based on the number of different species of birds identified in the second area in a selected time window, which may comprise: obtaining one or more recording of bird vocalisation in the second area in the selected time window; identifying, using a trained machine learning model, each species of bird in the one or more recordings of bird vocalisation in the second area and thereby obtaining an indication of each species of bird in the second area.

The method may comprise determining a change in at least one of: the indication of biodiversity in the first area; and, the indication of biodiversity in the second area, based on a proposed change to at least one of: the first area; and, the second area. Advantageously, the biodiversity of the area may be maintained or varied in a desirable manner e.g. without the costly need for trial and error.

An aspect provides a method of monitoring biodiversity, the method comprising: obtaining a first indication of biodiversity of an area based on the number of different species of birds identified in the area in a first selected time window; obtaining a second indication of biodiversity of the area based on the number of different species of birds identified in the area in a second selected time window; determining a change in biodiversity based on a comparison between the first indication of biodiversity and the second indication of biodiversity.

It will be understood that the selected time windows may be at the same time of day, week, month or even year - for example to obtain a comparison of the indication of biodiversity over the course of weeks, months, a season or from year to year.

Advantageously, determination of relative biodiversity of an area over time may be determined using the method thereby addressing the needs set out in the background above. The method can be executed without the notice of the birds and without harming the birds, thereby advantageously providing a determination which is non-invasive and non-destructive.

The method does not require a human user to make the determination of biodiversity in the area which has a number of advantages. The determination utilises a trained machine learning model which may make more accurate determinations of the number of species in the area (and therefore more accurate and objective determinations of biodiversity in the area) and may remove the related expense of employing a human to identify species in the area and to make a subsequent determination of biodiversity in the area.

The method may comprise proposing a course of action to maintain or increase the change in biodiversity. Advantageously, the biodiversity of the area may be maintained or varied in a desirable manner e.g. without the costly need for trial and error.

As noted above and as will be described in more detail below, it will be understood that recordings may comprise both bird vocalisation and sounds produced by other animals (either terranean or subterranean). It will therefore be understood that in some aspects of the disclosure there is provided a method for monitoring the biodiversity of an area, the method comprising:
obtaining one or more recordings of an area;
identifying, using a trained machine learning model, each species in the one or more recordings in the area and thereby obtaining an indication of each species in the area; and,
outputting an indication of biodiversity of the area based on the indication of each species in the area.

In particular, the method may be applied to identifying not only species of birds, but also other classes of organisms such as mammalia including bats and farm livestock, and soil-dwelling organisms.

Advantageously, determination of biodiversity in an area may be determined using the method thereby addressing the needs set out in the background above. The method can be executed without the notice of organisms and without harming the organisms, thereby advantageously providing a determination which is non-invasive and non-destructive.

The method does not require a human user to make the determination of biodiversity in the area which has a number of advantages. The determination utilises a trained machine learning model which may make more accurate determinations of the number of species in an area (and therefore more accurate and objective determinations of biodiversity in the area) and may remove the related expense of employing a human to identify species in the area and to make a subsequent determination of biodiversity in the area.

The method may comprise identifying, using a trained machine learning algorithm, an indication of the richness of an entire taxonomic group of organisms (such as an entire class of aves or mammalia) in the area, which may be based on the number of distinct species and optionally the trophic level that they represent; and, outputting an indication of general biodiversity of the area.

The method may comprise identifying, using a trained machine learning algorithm, the number of each species in the one or more recordings in the area, and thereby obtaining an indication of the abundance of each species; and, outputting an indication of biodiversity of the area further based on the abundance each species in the area. In such examples the area may be a plurality of different areas, defining a common assemblage of species. The indication of general biodiversity may also be based on the abundance of each species in the area.

Obtaining an indication of the richness of an entire class of organisms may comprise obtaining an indication of the richness of different trophic levels of the class of organism, and wherein outputting an indication of the general biodiversity comprises outputting an indication of the biodiversity of each trophic level.

Each of the one or more recordings may have a given duration. Advantageously, the duration may be selected to be long enough to obtain enough data (e.g. audible bird vocalisations) but short enough as to prevent slow transmission and/or slow processing (e.g. by the trained machine learning model) of the recordings. The recordings may be broken down into clips (for example, of the same duration) and pre-processed (as will be described in more detail below) for better processing by the machine learning model.

Each of the one or more recordings may be recorded at a selected time of day. Advantageously, the recordings may occur at regular intervals to increase the number of species audible in the recording, for example, some species may be more active at different times of day whereas other species (e.g., bats) may be more active at different times of night.

Optionally, the method may comprise determining a change in the indication of biodiversity in the area based on a proposed change to the area. Advantageously, the biodiversity of the area may be maintained or varied in a desirable manner e.g. without the costly need for trial and error.

An aspect provides a method of monitoring biodiversity, the method comprising: obtaining an indication of biodiversity of a first area based on the number of different species identified in the first area in a selected time window; obtaining an indication of biodiversity of a second area based on the number of different species identified in the second area in the selected time window; assigning a first biodiversity score to the first area and a second biodiversity score to the second area based on a comparison between the indication of biodiversity in the first area and the indication of biodiversity in the second area.

It will be understood that the selected time windows may be at the same time of day, week, month or even year - for example to obtain a comparison of the indication of biodiversity over the course of weeks, months, a season or from year to year.

Advantageously, determination of relative biodiversity of two areas may be determined using the method thereby addressing the needs set out in the background above. The method can be executed without the notice of the organisms and without harming the organisms, thereby advantageously providing a determination which is non-invasive and non-destructive.

The method does not require a human user to make the determination of biodiversity in the areas which has a number of advantages. The determination utilises a trained machine learning model which may make more accurate determinations of the number of species in the areas (and therefore more accurate and objective determinations of biodiversity in the areas) and may remove the related expense of employing a human to identify species in the areas and to make a subsequent determination of biodiversity in the areas.

The first area may have one or more attribute; the second area may have one or more attribute; wherein at least one of the one or more attributes of the first area may be similar to at least one of the one or more attributes of the second area.

At least one of the one or more attributes of the first area may be identical to at least one of the one or more attributes of the second area.

The one or more attributes may comprise attributes selected from the list of: latitude and longitude; altitude of the area (e.g., height above sea level); average temperature of the area; average rainfall; the hectarage (i.e. the surface area) of the area; the region in which the area is located (e.g., which town, county, province, country, etc.); the soil type of the area (e.g., clay, sandy, silt, loam, peat, chalk, etc.); presence and area of water, such as percentage of the area which is open water; the water sources in the area (e.g., marsh, pond, lake, ocean, stream, river, etc.); linear extent of water courses / ditches; presence and area of woodland/forest, such as the percentage of the area which is forest; linear extent of hedgerow; use of agrichemical and/or organic inputs; the usage of the area (e.g. livestock use and/or type (e.g., dairy farming, beef farming, pork farming, chicken farming,), crop farming (e.g., grazing, barley, potatoes, apples)); stocking densities; environment management schemes being applied to the area.

Advantageously, comparing areas with one or more similar attributes provides meaningful comparisons because the similar attributes are act as control variables.

The method may comprise obtaining an indication of biodiversity of a first area based on the number of different species identified in the first area in a selected time window, which may comprise: obtaining one or more recording in the area in the selected time window; identifying, using a trained machine learning model, each species in the one or more recordings in the first area and thereby obtaining an indication of each species in the first area.

The method may comprise obtaining an indication of biodiversity of a second area based on the number of different species identified in the second area in a selected time window, which may comprise: obtaining one or more recording in the second area in the selected time window; identifying, using a trained machine learning model, each species in the one or more recordings in the second area and thereby obtaining an indication of each species in the second area.

It will be understood that the selected time windows may be at the same time of day, week, month or even year - for example to obtain a comparison of the indication of biodiversity over the course of weeks, months, a season or from year to year.

An aspect of the disclosure provides a method of monitoring biodiversity, the method comprising: obtaining an indication of biodiversity of a first area based on the number of different species identified in the first area; obtaining an indication of biodiversity of a second area based on the number of different species identified in the second area; wherein; the first area has one or more attribute; the second area has one or more attribute; wherein at least one of the one or more attributes of the first area is similar to at least one of the one or more attributes of the second area; assigning a first biodiversity score to the first area and a second biodiversity score to the second area based on a comparison between the indication of biodiversity in the first area and the indication of biodiversity in the second area.

Advantageously, determination of relative biodiversity of two areas may be determined using the method thereby addressing the needs set out in the background above. The method can be executed without the notice of organisms and without harming the organisms, thereby advantageously providing a determination which is non-invasive and non-destructive.

The method does not require a human user to make the determination of biodiversity in the areas which has a number of advantages. The determination utilises a trained machine learning model which may make more accurate determinations of the number of species in the areas (and therefore more accurate and objective determinations of biodiversity in the areas) and may remove the related expense of employing a human to identify species in the areas and to make a subsequent determination of biodiversity in the areas.

At least one of the one or more attributes of the first area may be identical to at least one of the one or more attributes of the second area.

The one or more attributes may comprise at least one attribute selected from the list of: latitude and longitude; altitude of the area (e.g., height above sea level); average temperature of the area; average rainfall; the hectarage (i.e. the surface area) of the area; the region in which the area is located (e.g., which town, county, province, country, etc.); the soil type of the area (e.g., clay, sandy, silt, loam, peat, chalk, etc.); presence and area of water, such as percentage of the area which is open water; the water sources in the area (e.g., marsh, pond, lake, ocean, stream, river, etc.); linear extent of water courses / ditches; presence and area of woodland/forest, such as the percentage of the area which is forest; linear extent of hedgerow; use of agrichemical and/or organic inputs; the usage of the area (e.g. livestock use and/or type (e.g., dairy farming, beef farming, pork farming, chicken farming,), crop farming (e.g., grazing, barley, potatoes, apples)); stocking densities; environment management schemes being applied to the area.

Advantageously, comparing areas with one or more similar attribute provides meaningful comparisons because the similar attributes are act as control variables.

The method may comprise: obtaining an indication of biodiversity of a first area based on the number of different species identified in the first area in a selected time window, which may comprise: obtaining one or more recording in the area in the selected time window; identifying, using a trained machine learning model, each species in the one or more recordings of in the first area and thereby obtaining an indication (such as a list) of each species in the first area.

The method may comprise: obtaining an indication of biodiversity of a second area based on the number of different species identified in the second area in a selected time window, which may comprise: obtaining one or more recording in the second area in the selected time window; identifying, using a trained machine learning model, each species in the one or more recordings in the second area and thereby obtaining an indication of each species in the second area.

The method may comprise determining a change in at least one of: the indication of biodiversity in the first area; and, the indication of biodiversity in the second area, based on a proposed change to at least one of: the first area; and, the second area. Advantageously, the biodiversity of the area may be maintained or varied in a desirable manner e.g. without the costly need for trial and error.

An aspect provides a method of monitoring biodiversity, the method comprising: obtaining a first indication of biodiversity of an area based on the number of different species identified in the area in a first selected time window; obtaining a second indication of biodiversity of the area based on the number of different species identified in the area in a second selected time window; determining a change in biodiversity based on a comparison between the first indication of biodiversity and the second indication of biodiversity.

It will be understood that the selected time windows may be at the same time of day, week, month or even year - for example to obtain a comparison of the indication of biodiversity over the course of weeks, months, a season or from year to year.

The method may comprise proposing a course of action to maintain or increase the change in biodiversity. Advantageously, the biodiversity of the area may be maintained or varied in a desirable manner e.g. without the costly need for trial and error.

Accordingly, another aspect provides a method for monitoring the biodiversity of an area such as the soil surface of an area and/or a subterranean area, the method comprising: obtaining one or more recordings of terranean vibrations in the area; identifying, using a trained machine learning model, each species of soil dwelling organism (such as animals) in the one or more recordings of terranean vibrations in the area and thereby obtaining an indication of each species of soil dwelling organisms in the area; and outputting an indication of biodiversity of the area based on the indication of each species of soil dwelling organism identified in the area.

Advantageously, determination of biodiversity in an area may be determined using the method thereby addressing the needs set out in the background above. The method can be executed without the notice of the birds and without harming the birds, thereby advantageously providing a determination which is non-invasive and non-destructive.

The method does not require a human user to make the determination of biodiversity in the area which has a number of advantages. The determination utilises a trained machine learning model which may make more accurate determinations of the number of species in an area (and therefore more accurate and objective determinations of biodiversity in the area) and may remove the related expense of employing a human to identify species in the area and to make a subsequent determination of biodiversity in the area.

The method may comprise: identifying, using a trained machine learning algorithm, the frequency or occurrence of each species of soil dwelling organisms in the one or more recordings of terranean vibrations in the area; and, outputting an indication of biodiversity of the area further based on the indication of the frequency or occurrence of each species of soil dwelling organisms in the area.

In examples, each of the one or more recordings may have a given duration and/or each of the one or more recordings may be recorded at a selected time of day.

The method may comprise: determining a change in the indication of biodiversity in the area based on a proposed change to the area.

An aspect provides a computer readable non-transitory storage medium comprising a program for a computer configured to cause a processor to perform any of the methods described herein.

### Drawings

Embodiments of the disclosure will now be described, by way of example only, with reference to the accompanying drawings, in which:
Figure 1 illustrates a flow chart depicting a method of monitoring biodiversity in an area;
Figure 2 illustrates a schematic view of a system for performing the method of monitoring biodiversity in the area depicted by the flow chart illustrated in Figure 1;
Figure 3 illustrates a schematic view of a system for performing the method of monitoring biodiversity in the area depicted by the flow chart illustrated in Figure 1;
Figure 4 illustrates a timeline with three selected times at which recordings at obtained;
Figure 5A illustrates an indication of biodiversity in an area comprising a list of each species in the area;
Figure 5B illustrates an indication of biodiversity in an area comprising a list of each species in the area and a number of times each species present;
Figure 5C illustrates an indication of biodiversity in an area comprising a number of species in the area and a comparison of the biodiversity in the area relative to a benchmark area;
Figure 6A illustrates a flow chart depicting a method of monitoring biodiversity;
Figure 6B illustrates a schematic view of a system for performing the method of Figure 6A;
Figure 6C illustrates a plurality of biodiversity scores of a corresponding plurality of areas;
Figure 7A illustrates a flow chart depicting a method of monitoring biodiversity;
Figure 7B illustrates a schematic view of a system for performing the method of Figure 7A;
Figure 7C illustrates a plurality of biodiversity scores of a corresponding plurality of areas;
Figure 8A illustrates a flow chart depicting a method of monitoring biodiversity;
Figure 8B illustrates a schematic view of a system for performing the method of Figure 8A;
Figure 8C illustrates a graph showing a change in biodiversity;
Figure 9 illustrates a flowchart depicting a method for monitoring the biodiversity of an area;
Figure 10 illustrates how a sound recording may be converted into a Mel spectrogram for processing by a machine learning model; and
Figure 11 illustrates an example trophic diagram that provides an indication of general biodiversity in an assemblage or area.

In the drawings, like reference signs indicate like elements.

### Specific description

Embodiments of the claims relate to methods and systems of monitoring biodiversity in an area. In particular, the methods and systems obtain recordings of bird vocalisations in an area, then use a trained machine learning model to identify each species of bird present in the recording, and then to obtain an indication of biodiversity of that area, based on the identified species. This may give an objective assessment of biodiversity in the area. Furthermore, indications of biodiversity of an area may be compared to other comparable indication of biodiversity from: the same area at a different time; another area at the same time; and/or, another area which may share an attribute with the area.

The same principle can be applied to soil dwelling organisms (i.e. they can be detected and distinguished using audio recordings).

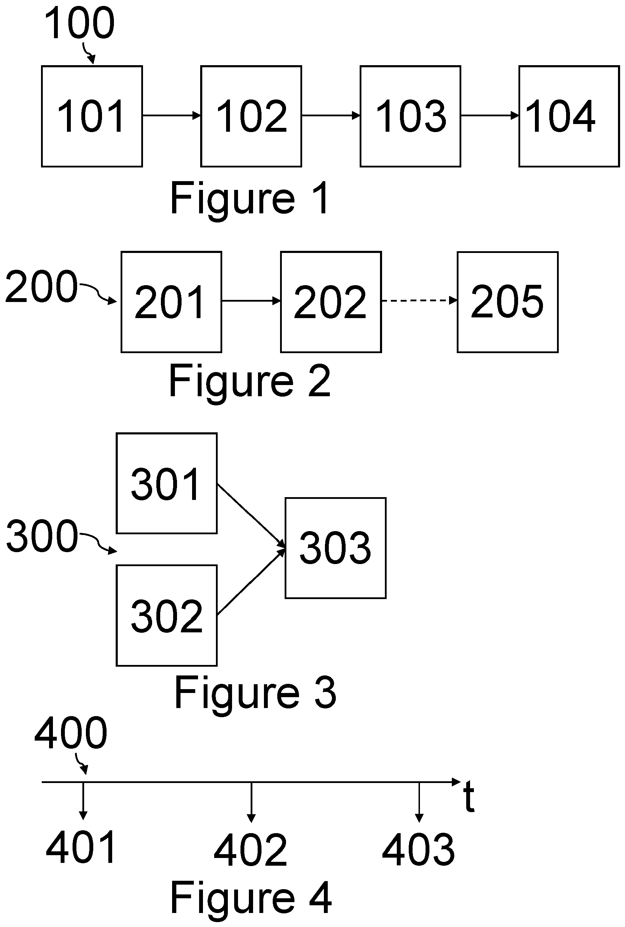

Figure 1 illustrates a flow chart depicting a method 100 of monitoring biodiversity of an area. In brief, the method 100 comprises steps of: obtaining, 101, one or more recording of bird vocalisation in the area; identifying, 102, using a trained machine learning model, each species of bird in the one or more recordings of bird vocalisation in the area and thereby obtaining an indication of each species of bird in the area; outputting, 103, an indication of biodiversity of the area based on the indication of each species of bird in the area. The method 100 comprises the steps described in detail below.

Figure 2 illustrates a schematic view of a system 200 for performing the method 100 of monitoring biodiversity in the area. The system comprises a recording device 201 and a computing device 202. The system 200 may also comprise at least one display 205. The display may be a local display (e.g., a display of the computing device, a display of a handheld device), or a remote display such as a display above or adjacent to a farmland, woodland or other geographical area. Use of the system 200 to perform the method 100 is described in the detail below.

The method comprises a step of obtaining, 101, one or more recording of bird vocalisation in the area.

The recording device 201 comprises: a microphone configured to obtain audio recordings; a memory for storing audio recordings; and, a communications interface for communicating with the computing device 202.

The recording device 201 is disposed in the area (e.g. outdoors, such as on farmland), therefore, when the microphone records an audio recording, the audio recording captures sounds audible in the area in which the recording device 201 is disposed. The recording device 201 is configured to obtain one or more audio recordings, using the microphone, wherein the audio recordings comprise bird vocalisation e.g. an element of the audio recording is a recording of bird vocalisation audible in the area.

The recording device 201 obtains a recording of bird vocalisation in the area. The recording of bird vocalisation in the area is stored in the memory of the recording device 201. The recording device 201 may obtain a plurality of recordings of bird vocalisation using the microphone and store these recordings in the memory.

Each recording has a given duration. For example, the duration may be 1 minute. The recordings may be further divided into shorter duration clips, for example of 5s duration, for processing by the machine learning model.

The method may comprise obtaining a plurality of recordings wherein each recording is obtained at a selected time of day. The recording device 202 may be programmed to obtain, using the microphone, an audio recording at each selected time of day.

Figure 4 illustrates a timeline 400 with the three selected times 401, 402, 403 at which recordings at obtained. Three selected times are shown as an example, but it will be appreciated that any number of recordings may be obtained per day, for example, 1 recording per day, 2 recordings per day, 3 recordings per day, 4 recordings per day, 5 recordings per day, or more.

For example, a first recording 401 may be obtained at 0600hrs (i.e. a first selected time of day), a second recording 402 obtained at 1200hrs (i.e. a second selected time of day), and a third recording 403 obtained at 1800hrs (i.e. a third selected time of day).

Each recording may be an identical given duration, for example each recording may have a duration of one minute. Therefore, the time window of each recording may be: 0600hrs to 0601 hrs for the first recording; 1200hrs to 1201 hrs for the second recording; 1800hrs to 1801 hrs for the third recording. It will be appreciated that the recordings at each selected time of day may have different durations.

In such examples, the recording device 202 may be programmed to obtain, using the microphone, an audio recording at each time of day. For example, the recording device 202 may comprise a clock which, at each selected time of day, triggers the microphone to obtain an audio recording.

For example, a first recording 401 may be obtained at dawn (i.e. a first selected time of day), a second recording 402 obtained at midday (i.e. a second selected time of day), that is a time halfway between dawn and dusk, and a third recording 403 obtained at dusk (i.e. a third selected time of day). The duration of the recordings may be selected based on the selected time of day of said recording. For example, the dawn and dusk recordings may have a first duration, for example of 1 minute, whereas the midday recording may have a second duration, wherein the second duration is shorter than the first duration, for example 5 minutes. Bird vocalisation may be more frequent at dawn and dusk than at midday. Therefore, the recordings at dawn and dusk may have sufficient content of bird vocalisation during a recording having a first duration whereas the recording at midday requires a longer duration, namely the second duration, to ensure that there is sufficient content of bird vocalisation during the recording. Sufficient content of bird vocalisation during the recording means each species of bird present at the area will provide an audible vocalisation during the duration of the recording.

In such examples, the recording device 201 may be programmed to obtain, using the microphone, an audio recording at each time of day. For example, the recording device 202 may be programmed with a calendar with times of dusk and dawn for the area in which the recording device is disposed. The recording device 201 may also comprise a clock which, at each selected time of day set out in the calendar, triggers the microphone to obtain an audio recording.

The recording device 201 sends, using the communications interface, the recording of bird vocalisation in the area to the computing device 202. The recording is obtained from the memory of the recording device and sent via the communications interface to the computing device 202. In examples wherein a plurality of bird vocalisations are stored in the memory, the plurality of bird vocalisations may all be sent to the computing device 202 at selected time. For example, the recordings of the bird vocalisations may be obtained and stored throughout the day, then after the last recording of the day has been obtained, every recording is sent from the recording device 201 to the computing device 202 as a single pack. Additionally, or alternatively, for example, recordings of the bird vocalisations may be obtained at a different frequency, such as every two weeks, and sent from the recording device 201 after each recording session, or alternatively after a selected threshold period of time, such as a month or a few months so that a set of recordings may be sent in a single packet. For example, the set of recordings may be sent when a connection to the internet is made. The pack may comprise each recording with an associated time (e.g. time in day and date) when each recording was obtained.

Another system 300 is illustrated in Figure 3. The system comprises a first recording device 301, a second recording device 302, and a computing device 303. The first recording device 301 obtains one or more recordings of bird vocalisations in a first area wherein the first recording device 301 is disposed. The second recording device 302 obtains one or more recordings of bird vocalisations in a second area wherein the second recording device 302 is disposed. The first recording device 301 and second recording device 302 may have the features and functionality described herein, for example, the features and functionality of the recording device 201 described above.

The first area and second area may be separate areas e.g. the distance between the first area and second area may be such so that bird vocalisations audible in the first area are not audible in the second area and vice versa. Alternatively, the first area and the second area may overlap or be coincident, in which case, providing two recording devices may increase the amount of data obtained which may in turn improve the accuracy of the indication of biodiversity obtained.

In examples, the recording may be obtained by the microphone then sent directly to the computing device 202 using the communications interface e.g. the memory of the recording device may not be not required.

The computing device 202 comprises: a communications interface configured to receive recordings from the recording device 201; a trained machine learning model configured to identify each species of bird in recordings of bird vocalisation in the area, and thereby provide an indication of each species of bird in the area; and, a device output configured to output an indication of biodiversity of the area based on the indication of each species of bird in the area. The display 205 may be configured to receive the device output to provide an alert, notification or other warning in the event that the output indication of biodiversity is above a selected threshold.

The computing device 202 receives one or more recordings of bird vocalisations in the area via the communications interface 201. Each recording may be received by the computing device 202 after being sent to the computing device 202 by the recording device 201 shortly after the recording is recorded by the recording device 201. A plurality of recordings may be received by the computing device 202 is a single packet after being sent to the computing device 202 by the recording device 201 at a selected time of the day (e.g. after all of the recordings for that day have been recorded by the recording device 201).

The method comprises the step of identifying, 102, using a trained machine learning algorithm, each species of bird in the one or more recordings of bird vocalisation in the area, and thereby obtaining an indication of the number of species of bird in the area.

The computing device 202 is configured to identify each species of bird in a recording of bird vocalisation in the area using the trained machine learning model. The functionality of the model trained machine learning model is described in more detail elsewhere in the application.

In simple terms, the trained machine learning model receives as an input, a recording of the bird vocalisation in the area (e.g. obtained by the recording device 201).

Next the trained machine learning model identifies each species of bird audible in the recording of the bird vocalisation in the area i.e. the identification is based on the recording. Simply put, birds of a given species have unique vocalisations (e.g. unique birdsongs) which can be used to identify the species.

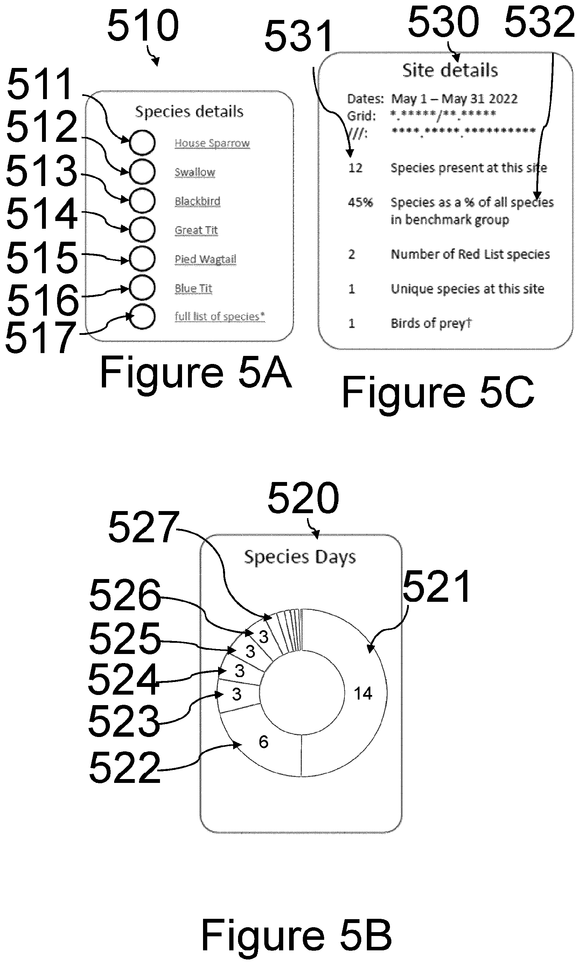

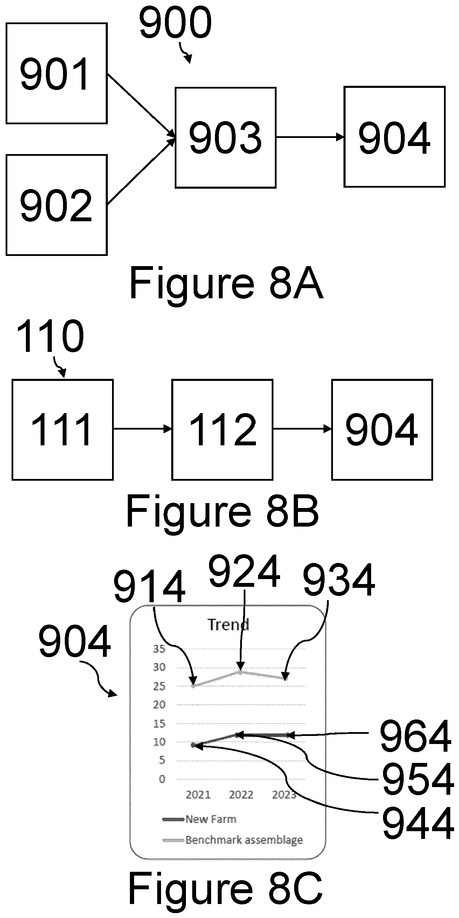

Then, the trained machine learning model the outputs an indication of the number of species of bird in the recording. For example, this indication may be a list of each species of bird audible in the recording (e.g. `house sparrow, great tit, starling') such as the list 510 illustrated in Figure 5A and/or a number of unique species of bird audible in the recording (e.g. `3') such as the points 964, 954, 944, on the trend graph 904 in Figure 8C.

In some examples, the method may optionally comprise identifying, using the trained machine learning algorithm, an indication of the richness of an entire class of organisms (such as aves) in the area, which may be based on the number of distinct species and optionally the trophic level that they represent; and, outputting an indication of general biodiversity of the area. The bird species richness of an area may be used to indicate a measure of wider biodiversity. Obtaining an indication of the richness of an entire class of organisms may comprise obtaining an indication of the richness of different trophic levels of the class of organism, and wherein outputting an indication of the general biodiversity comprises outputting an indication of the biodiversity of each trophic level.

The method may optionally comprise a step of identifying, using the trained machine learning algorithm, the number of birds of each species of bird (also known as the abundance of each species of bird) in the one or more recordings of bird vocalisation in the area, and thereby obtaining an indication of the number or abundance of birds of each species of bird in the area.

In such examples, the computing device 202, may with the trained machine learning algorithm may identify each species of bird audible and then distinguish the number of individuals of each species. For example, the trained machine learning algorithm may identify a bird vocalisation in the audio recording indicative of a given species of bird (e.g. a house sparrow), then discern the number of birds of that species based on at least one of: the volume (e.g. magnitude) of the bird vocalisation; the typical length of bird vocalisation of the given species (thereby determining the duration of a vocalisation may indicate the presence of more than one bird of that species if the determined duration exceeds the typical duration); the number of times a typical vocalisation is begun within a given period of time (e.g. if a vocalisation of a given species begins five times during the a period equal to the typical duration of the vocalisation of the species, then it may be determined that five birds of the species are present); the typical groupings of birds of given species (e.g. if a single raven vocalisation is audible in the recording, then it may be assumed that two ravens are present).

In such examples, the indication of the number of birds of each species in the area may comprise a list identifying each species audible in the audio recording along with a tally of the number birds of that species identified in the area based on the recording, e.g. house sparrow - 10, great tit - 4, starling - 2.

The method comprises the step of outputting, 103, an indication of biodiversity of the area further based on the indication of the number species of bird in the area.

The device output of the computing device 202 outputs an indication of biodiversity of the area based on the indication of each species of bird in the area.

The method may then comprise the step of providing 104 an alert or other notification in the event that the indication of biodiversity is above a selected threshold. This may involve displaying a warning at an entrance to farmland and/or other geographical area in the event that the indication of biodiversity is above a selected threshold. For example, the warning may be displayed on the display 205. The display 205 may be configured to receive the device output to provide an alert, notification or other warning in the event that the output indication of biodiversity is above a selected threshold.

It will be understood that in some examples the method comprises determining whether the output indication of biodiversity is above a selected threshold level of biodiversity. The selected threshold level of biodiversity may be selected so that only particularly high levels of biodiversity, for example achieved at times of nesting, are determined as being above the selected threshold level of biodiversity. Advantageously, this may enable farms or other landowners to signal to visitors that they should not enter during periods of peak wildlife/biodiversity activity and, in so doing, zones and times of peak breeding birds and other active wildlife will be protected from anthropogenic disturbance.

Additionally, or alternatively, the step of providing 104 an alert or other notification in the event that the indication of biodiversity is above a selected threshold may comprise sending an alert or notification to a computing or mobile device, for example on an app running on a smart phone. This may enable farmers and/or other landowners or stakeholders to take precautions, for example by erecting physical signs or barriers to prevent or inhibit the access of visitors.

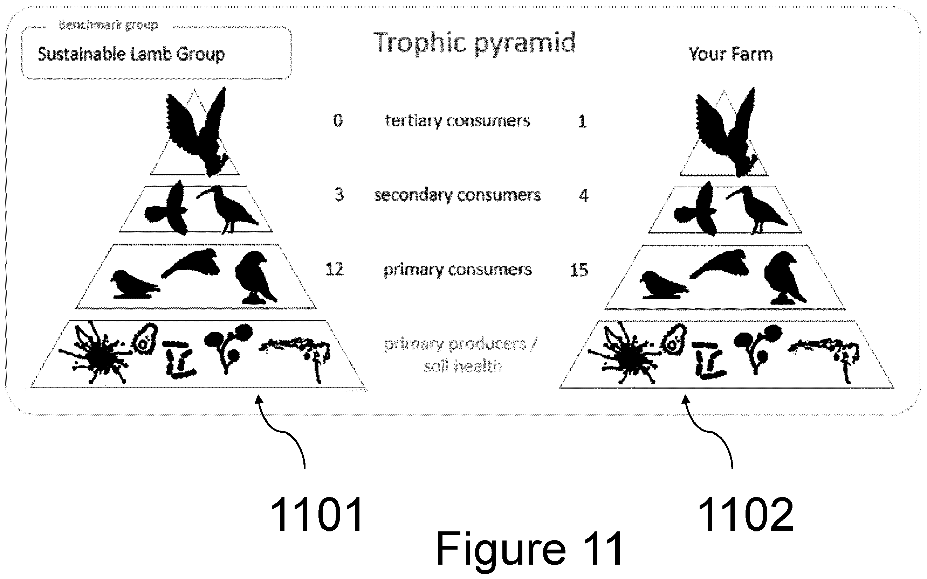

For example, the indication of biodiversity of the area may comprise a list of each species of bird audible in the recording (e.g. `house sparrow, great tit, starling') and/or a number of unique species of bird audible in the recording (e.g. `3'); in other words, the indication of biodiversity may be the same as the indication of each species of bird in the area. In some examples, as described in more detail with reference to Figure 11, the indication of biodiversity may include an indication of the number of species at each trophic level.

The indication of biodiversity of the area may be weighted based on the specific species of bird audible in the recording. For example, more common birds for the area may have a lower score relative to rarer bird for the area. For example, in a given area, a house sparrow may have a score of 0.50, a great tit 0.75 and a starling 1.10 i.e. the house sparrow is the most common of the three identified species of bird, followed by the great tit, then the relatively rarer starling. Then these weighted scores may be combined, for example summed, to provide an indication of the biodiversity of the area. For example, the biodiversity in the aforementioned example may be 2.35.

In examples, wherein the method comprises a step of identifying, using the trained machine learning algorithm, the number of birds of each species of bird in the one or more recordings of bird vocalisation in the area, the indication of biodiversity may be determined based on the number of birds of each species.

For example, the indication of biodiversity may be the indication of the number of birds of each species of bird in the area, that is a list identifying each species audible in the audio recording along with a tally of the number birds of that species identified in the area based on the recording, e.g. house sparrow - 10, great tit - 4, starling - 2.

The indication of biodiversity may be weighted based on the rarity of the species of bird in the area and the number of birds in the area. For example, in a given area, a house sparrow may have a score of 0.50, a great tit 0.75 and a starling 1.10, and the number of birds of each species in the area may be house sparrow - 10, great tit - 4, starling - 2. The indication of biodiversity may be the sum of the product of the rarity score of each species with the number of birds of that species, for example, 0.50*10 (e.g. house sparrow) + 0.75*4 (e.g. great tit) + 1.10*2 (e.g. starling) = 10.2.

The computing device 202 may be a server and the step of outputting the indication of biodiversity may comprise sending the indication to an additional computing device (e.g. a personal computer, such as a desktop or laptop computer, a tablet computer, or a smart phone).

The indication of biodiversity may be obtained each day and output to a storage location of the computing device 202 or of an additional computing device (e.g. a personal computer, such as a desktop or laptop computer, a tablet computer, or a smart phone).

The method may comprise an optional step of determining a change in the indication of biodiversity in the area based on a proposed change to the area.

In such examples, a proposed change to the area may be sent to the computing device 202 by an additional computing device (e.g. a personal computer, such as a desktop or laptop computer, a tablet computer, or a smart phone).

The proposed change to the area may be any combination of: introduction/removal of a food source; increase/decrease of amount of food provided by a food source; introduction/removal of a water source; increase/decrease of amount of water provided by a water source; introduction/removal of a predator; change of use of the area (e.g. if the area is a specific type of farmland having one or more specific attributes).

The computing device 202 determines the change in the indication in biodiversity based on the proposed change to the area. A trained machine learning model may be provided to determine the change in the indication of biodiversity in the area based on a proposed change to the area.

The change in the indication of biodiversity may be based solely on the proposed change to the area. For example, proposed change to the increase an amount of food provided by a food source then the change in biodiversity may increase because there is reduced competition for the food.

The change in the indication of biodiversity may be based on the proposed change to the area and on the indication of biodiversity of the area. For example, the proposed change of the introduction of a predator to the area there may be no effect on the indication of biodiversity if the indication of biodiversity indicates that there are no species of bird present which are predated by the predator.

Some exemplary indications of biodiversity are illustrated in Figures 5A to 5C. Figure 5A illustrates an indication of biodiversity in an area comprising a list of each species in the area; Figure 5B illustrates an indication of biodiversity in an area comprising a list of each species in the area and a number of times each species present; Figure 5C illustrates an indication of biodiversity in an area comprising a number of species in the area and a comparison of the biodiversity in the area relative to a benchmark area.

The indication of biodiversity in the area illustrated in Figure 5A comprises entries: 511 corresponding to the presence of a house sparrow in the area; 512 to a swallow; 513 to a blackbird; 514 to a great tit; 515 to a pied wagtail; 516 to a blue tit; and other birds 517.

Figure 5B illustrates an indication of biodiversity in an area as a function of "species days" 520. The list of species days 520 comprises a list of each species in the area and a number of times (or frequency) of each species present. In the present example, the number associated with each species is the number of days wherein the species was identified as present. The list comprises: 521 corresponding to the presence of a house sparrow present in the area on 14 days; 522 a swallow present on 6 days; 523 a blackbird present on 3 days; 524 a great tit present on 3 days; 525 a pied wagtail present on 3 days; 526 a blue tit present on 3 days; and other birds 517 whose frequency was less than 3 days.

Species Days may be defined as the total number of days during which time the species vocalisations are recorded in the area. These may be used to provide an indication of residency - the amount of time the species remains actively present, relative to the total numbers of days when recording is taking place. E.g. if during a recording period of 21 days, a species is heard on 14 days this is an indication of greater residency than a species only recorded on 1 day. This in turn is an indication of the biodiversity - defined by trophic zones - present within that habitat.

Figure 5C illustrates site details 530 providing an indication of biodiversity in an area comprising a number, 531, of species in the area and a comparison, 532, of the biodiversity in the area relative to a benchmark area. The number of species of bird present in the area, 531, in the present example, is 12. This number is compared to the number of species of bird in the benchmark group (e.g. a notional area with similar attributes to the area), in this case, the comparison comprises a percentage of the birds present in the area compared to the number of species of birds in the benchmark group, in this example, is 45%.

Useful data can be obtained by comparing a first indication of biodiversity with a second indication of biodiversity. For useful data to be obtained by such a comparison, the first indication of biodiversity and the second indication of biodiversity must have something in common. Such comparisons include:
A) comparing biodiversity indications of two different areas wherein the indications are obtained at the same time. For example, assigning a first biodiversity score to a first area and a second biodiversity score to a second area based on a comparison between indications of biodiversity of the first area and second area, wherein the indications of biodiversity are obtained in the same selected time window;
B) comparing biodiversity indications of two different areas wherein the two areas have a characteristic (e.g. attribute in common). For example, assigning a first biodiversity score to a first area and a second biodiversity score to a second area based on a comparison between indications of biodiversity of the first area and second area, wherein the first area has an attribute which is similar to an attribute of the second area;
C) comparing biodiversity indications of the same area wherein the biodiversity indications are obtained at different times. For example, determining a change in biodiversity based on a comparison between a first and second indication of biodiversity of an area, wherein the first indication is obtained during a first selected time window and the second indication is during a second selected time window (e.g. later than the first selected time window).

Each type of comparison A), B) and C) are described in more detail below.

### A) comparing biodiversity indications of two different areas wherein the indications are obtained at the same time

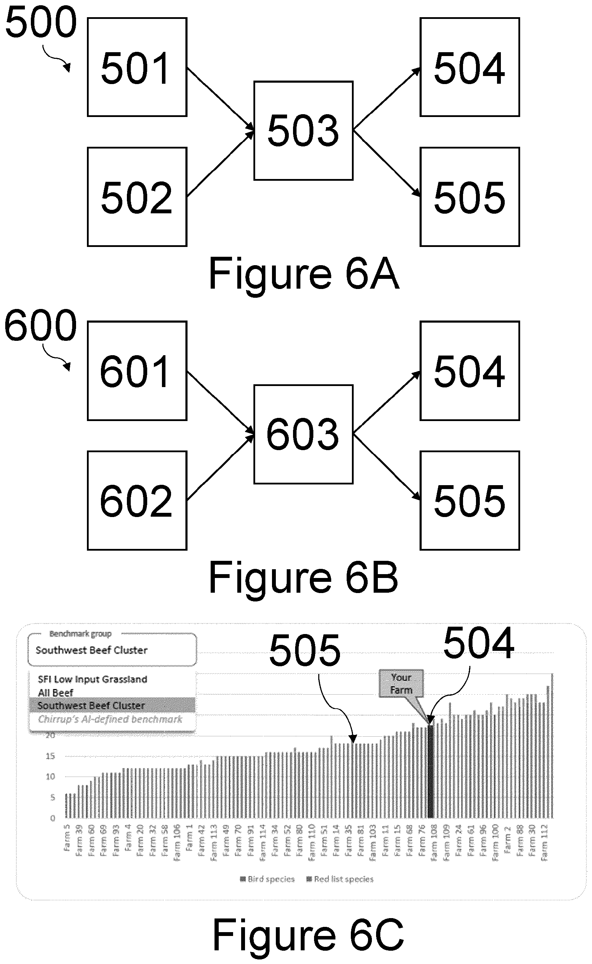

Figure 6A illustrates a flow chart depicting a method 500 of monitoring biodiversity. In particular, the method 500 comprises assigning biodiversity scores to areas based on comparison of indications of biodiversity of the areas. The method comprises the steps of: obtaining, 501, an indication of biodiversity of a first area based on the number of different species of birds identified in the first area in a selected time window; obtaining, 502, an indication of biodiversity of a second area based on the number of different species of birds identified in the second area in the selected time window; assigning, 503, a first biodiversity score, 504, to the first area and a second biodiversity score, 505, to the second area based on a comparison between the indication of biodiversity in the first area and the indication of biodiversity in the second area.

Figure 6B illustrates a system 600 for assigning biodiversity scores to areas based on comparison of indications of biodiversity of the areas. The system 600 comprises: a system 601 is configured to obtain an indication of biodiversity of a first area based on the number of different species of birds identified in the first area in a selected time window; a system 602 is configure to obtain an indication of biodiversity of a second area based on the number of different species of birds identified in the second area in the selected time window; a computing device 603 configured to assign a first biodiversity score, 504, to the first area and a second biodiversity score, 505, to the second area based on a comparison between the indication of biodiversity in the first area and the indication of biodiversity in the second area.

The step of obtain obtaining, 501, an indication of biodiversity of a first area based on the number of different species of birds identified in the first area in a selected time window can be executed in the manner described herein. The system 601 is configured to obtain the indication of biodiversity in the first area.

For example, the system 601 may comprise a recording device and computing device as described herein (e.g. above with reference to Figure 2 or Figure 3). Alternatively, the system 601 may comprise a recording device, configured to obtain one or more recording of bird vocalisation in the first area in the selected time window, and the computing device 603, may comprise a trained machine learning model configured to identify each species of bird in the one or more recordings of bird vocalisation in the first area and thereby obtaining an indication of each species of bird in the area and the computing device 603 may be configured to output an indication of biodiversity of the area based on the indication of each species of bird in the area.

The step of obtaining, 502, an indication of biodiversity of a second area based on the number of different species of birds identified in the second area in the selected time window can be executed in the same manner as step 501. The system 602 is configured to obtain the indication of biodiversity in the second area in the same manner as the system 601 described above.

The step of assigning, 503, a first biodiversity score, 504, to the first area and a second biodiversity score, 505, to the second area based on a comparison between the indication of biodiversity in the first area and the indication of biodiversity in the second area can be executed in a variety of ways.

Figure 6C illustrates a plurality of biodiversity scores of a corresponding plurality of areas. In particular, Figure 6C illustrates an x-axis corresponding to a biodiversity score, wherein the further along the x-axis (e.g. further right in the Figure) an area is disposed, then the greater the biodiversity score of the area. In the present example the first biodiversity score 504 is disposed further along the x-axis than the second biodiversity score 505, therefore, the first biodiversity score is higher (i.e. better; indicative of more biodiversity) than the second biodiversity score 505.

For example, if both the indication of biodiversity in the first area and the indication of biodiversity in the second area comprise a number (e.g. indication of biodiversity in the first area = 3; indication of biodiversity in the second area = 5), then the step of assigning a biodiversity score to the first area and the second area comprises ranking them relative to one another and assigning a score which is a number indicative of that rank e.g. indication of biodiversity in the first area = 3 < indication of biodiversity in the second area = 5, therefore, the score assigned to the second area is '1' (i.e. the best score) and the score assigned to the first area is '2'.

Furthermore, more than two areas can be assigned a score in this manner. If an indication of biodiversity in a third area obtained at the selected time window, then a third biodiversity score is assigned to the third area, based on a comparison between: the indication of biodiversity in the first area and the indication of biodiversity in the third area; and, the indication of biodiversity in the second area and the indication of biodiversity in the third area. Such a method can be extended to any number of indications of biodiversity in any number of areas.

In addition to each of the indications being obtaining during the same selected time window, the comparison may be constrained to indications which are similar (and therefore comparable) in other ways. For example, each area may have one or more attributes, and each area may share at least one similar or one identical attribute. The attributes and how they are deemed similar or identical is described in detail herein, for example, below with reference to step 703.

### B) comparing biodiversity indications of two different areas wherein the two areas have a characteristic (e.g. attribute in common)

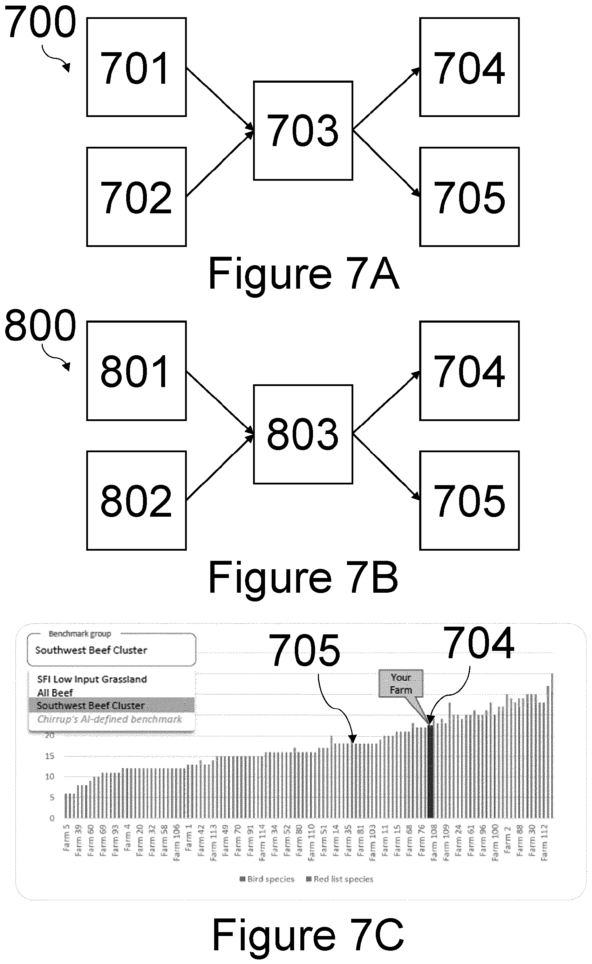

Figure 7A illustrates a flow chart depicting a method 700 of monitoring biodiversity. In particular, the method 700 comprises assigning biodiversity scores to areas which share an attribute based on comparison of indications of biodiversity of the areas. The method comprises the steps of: obtaining, 701, an indication of biodiversity of a first area based on the number of different species of birds identified in the first area; obtaining, 702, an indication of biodiversity of a second area based on the number of different species of birds identified in the second area; and, assigning, 703, a first biodiversity score 704 to the first area and a second biodiversity score 705 to the second area based on a comparison between the indication of biodiversity in the first area and the indication of biodiversity in the second area.

Figure 7B illustrates a system 800 for assigning biodiversity scores to areas based on comparison of indications of biodiversity of the areas. The system 800 comprises: a system 801 is configured to obtain an indication of biodiversity of a first area based on the number of different species of birds identified in the first area; a system 802 is configured to obtain an indication of biodiversity of a second area based on the number of different species of birds identified in the second area; a computing device 803 configured to assign a first biodiversity score 704 to the first area and a second biodiversity score 705 to the second area based on a comparison between the indication of biodiversity in the first area and the indication of biodiversity in the second area.

Importantly, for the examples illustrated in Figures 7 and 8, the first area has one or more attributes and the second area has one or more attributes, wherein at least one of the one or more attributes of the first area is similar to at least one of the one or more attributes of the second area.

For example, each area may have one or more attributes, and each area may share at least one similar or one identical attribute.

The areas may be farms, or specific areas of farms (e.g., different fields or groups of fields). Therefore, the attributes may comprise: latitude and longitude; altitude of the area (e.g., height above sea level); average temperature of the area; average rainfall; the hectarage (i.e. the surface area) of the area; the region in which the area is located (e.g., which town, county, province, country, etc.); the soil type of the area (e.g., clay, sandy, silt, loam, peat, chalk, etc.); presence and area of water, such as percentage of the area which is open water; the water sources in the area (e.g., marsh, pond, lake, ocean, stream, river, etc.); linear extent of water courses / ditches; presence and area of woodland/forest, such as the percentage of the area which is forest; linear extent of hedgerow; use of agrichemical and/or organic inputs; the usage of the area (e.g. livestock use and/or type (e.g., dairy farming, beef farming, pork farming, chicken farming,), crop farming (e.g., grazing, barley, potatoes, apples)); stocking densities; environment management schemes being applied to the area.

For example, the first area attributes may comprise 'beef farming' and `pond water type' and the second area attributes may comprise 'beef farming' and 'ocean water type'. the first area and second area have an identical attribute, namely 'beef farming' and the indications of biodiversity obtained at a selected time window are therefore comparable because they are obtained at the selected time and window and because they share an identical attribute i.e. 'beef farming'.

For example, the first area attributes may comprise 'beef farming' and `hectarage = 50 ha' and the second area attributes may comprise `chicken farming' and `hectarage = 70 ha'. The method of comparing the indications from the first area and the second area can compare indications of the first area and second area provided that they are similar if either, the difference between the attribute of the first area and the corresponding attribute of the second area is less than a preselected amount, or if both attributes fall within a preselected range.

For example, the method of comparing the indications from the first area and the second area can compare indications of the first area and second area provided that they are similar if the difference between the hectarage attribute of the first area and the hectarage attribute of the second area is less than a preselected amount of 30 ha. In the present example, the difference between 50 ha (first area) and 70 ha (second area) is 20 ha, therefore, these attributes are considered similar, and the indications of biodiversity may be compared.

For example, the method of comparing the indications from the first area and the second area can compare indications of the first area and second area provided that they are similar if both attributes fall within a preselected range of 0 ha to 100 ha. In the present example, the 50 ha (first area) and 70 ha (second area) are both within the preselected range of 0 ha to 100 ha, therefore, these attributes are considered similar, and the indications of biodiversity may be compared.

The step of obtaining, 701, an indication of biodiversity of a first area based on the number of different species of birds identified in the first area can be executed in the manner described herein. The system 801 is configured to obtain the indication of biodiversity in the first area.

For example, the system 801 may comprise a recording device and computing device as described herein (e.g. above with reference to Figure 2 or Figure 3). Alternatively, the system 801 may comprise a recording device, configured to obtain one or more recording of bird vocalisation in the first area, and the computing device 803, may comprise a trained machine learning model configured to identify each species of bird in the one or more recordings of bird vocalisation in the first area and thereby obtaining an indication of each species of bird in the area and the computing device 803 may be configured to output an indication of biodiversity of the area based on the indication of each species of bird in the area.

The step of obtaining, 702, an indication of biodiversity of a second area based on the number of different species of birds identified in the second area can be executed in the same manner as step 701. The system 802 is configured to obtain the indication of biodiversity in the second area in the same manner as the system 801 described above.

The step of assigning, 703, a first biodiversity score, 704, to the first area and a second biodiversity score, 705, to the second area based on a comparison between the indication of biodiversity in the first area and the indication of biodiversity in the second area can be executed in a variety of ways as described herein, for example, above with reference to the step 503. The only difference in the present step 703 to the step 503, is that in the step 703 the first area and second area must have at least one similar attribute.

Figure 7C illustrates a plurality of biodiversity scores of a corresponding plurality of areas. In particular, Figure 7C illustrates an x-axis corresponding to a biodiversity score, wherein the further along the x-axis (e.g. further right in the Figure) an area is disposed, then the greater the biodiversity score of the area. In the present example the first biodiversity score 704 is disposed further along the x-axis than the second biodiversity score 705, therefore, the first biodiversity score is higher (i.e. better; indicative of more biodiversity) than the second biodiversity score 705.

For example, if both the indication of biodiversity in the first area and the indication of biodiversity in the second area comprise a number (e.g. indication of biodiversity in the first area = 3; indication of biodiversity in the second area = 5), then the step of assigning a biodiversity score to the first area and the second area comprises ranking them relative to one another and assigning a score which is a number indicative of that rank e.g. indication of biodiversity in the first area = 3 < indication of biodiversity in the second area = 5, therefore, the score assigned to the second area is '1' (i.e. the best score) and the score assigned to the first area is '2'.

Furthermore, more than two areas can be assigned a score in this manner. If an indication of biodiversity in a third area obtained at the selected time window, then a third biodiversity score is assigned to the third area, based on a comparison between: the indication of biodiversity in the first area and the indication of biodiversity in the third area; and, the indication of biodiversity in the second area and the indication of biodiversity in the third area. Such a method can be extended to any number of indications of biodiversity in any number of areas.

In addition to each of the indications sharing at least one similar attribute, the comparison may be constrained to indications which are similar (and therefore comparable) in other ways, for example, indications obtained during the same selected time window which is described in more detail herein, for example, above with reference to the method 500.

### C) comparing biodiversity indications of the same area wherein the biodiversity indications are obtained at different times

Figure 8A illustrates a flow chart depicting a method 900 of monitoring biodiversity. In particular, the method 900 comprises determining a change in biodiversity score for a given area over time (e.g. the change of biodiversity score for the same area over a year). The method comprises the steps of: obtaining, 901, a first indication of biodiversity of an area based on the number of different species of birds identified in the area in a first selected time window; obtaining, 902, a second indication of biodiversity of the area based on the number of different species of birds identified in the area in a second selected time window; determining, 903, a change in biodiversity, 904, based on a comparison between the first indication of biodiversity and the second indication of biodiversity.

Figure 8B illustrates a system 110 for assigning biodiversity scores to areas based on comparison of indications of biodiversity of the areas. The system 110 comprises: a system 111 configured to obtain: a first indication of biodiversity of an area based on the number of different species of birds identified in the area in a first selected time window; and, a second indication of biodiversity of the area based on the number of different species of birds identified in the area in a second selected time window. The system 110 comprises a computing device configured to determine a change in biodiversity, 904, based on a comparison between the first indication of biodiversity and the second indication of biodiversity.

Therefore, provided is a method and system for determining a change in biodiversity of a given area. Conveniently, the changing in biodiversity 904 may be used to assess the effect of changes to the area on biodiversity.

The change in biodiversity may be quantified as a biodiversity indication as described in detail elsewhere.

Figure 8C illustrates a graph 904 showing a change in biodiversity. In particular, Figure 8A illustrates an x-axis, corresponding to time (in years in this particular example), and, a y-axis, corresponding to an indication of biodiversity of an area, in this case, the number of different species of birds in the area. In this example, the area is a farm which may comprise a plurality of different recording areas within the farm area. Plotted against these axes are points corresponding to the indication of biodiversity in the area in a first year 944, a second year 954, and a third year 964. The arrangement of these points depicts a trend. A line joining any two points may be considered a change in biodiversity (or, for example, the gradient of this line may be considered the change in biodiversity.

Also disposed relative to the axes are points corresponding to the indication of biodiversity in another area (a "benchmark assemblage"), which may comprise a plurality of different recording areas, in the first year 914, a second year 924, and a third year 934. Similar trends (e.g. changes in biodiversity) can be obtained from these points in a similar way. The biodiversity of the two can be directly compared on the graph 904.

The benchmark assemblage may be the sum of all unique species of the same class or group of organisms in another area or plurality of areas having the same or similar attributes, for example as selected by a user, or as selected by a machine learning model. For example, the benchmark assemblage may be determined based on an algorithm or machine learning model based on a plurality of different attributes. For example, the benchmark assemblage may be derived from an area that has a plurality of different attributes in common to the area of interest. For example, statistical techniques (such as cluster analysis and/or segmentation) may be used to define membership to the assemblage. It will be understood that a farm can be a member of multiple benchmark groups and its species richness may be benchmarked against multiple assemblages.

In examples, the method may comprise an intermediate step of assigning a first biodiversity score based on the first indication and a second biodiversity score based on the second indication. The two biodiversity scores may be used to determine a change in biodiversity (e.g. they are inputs for the determination). For example, each of these steps may be executed by the computing device 112.

The computing device 112 may determines the change in the indication in biodiversity based on a proposed change to the area (such as the proposed use of pesticides, change in land use or farming techniques, etc.). A trained machine learning model may be provided to determine the change in the indication of biodiversity in the area based on a proposed change to the area.

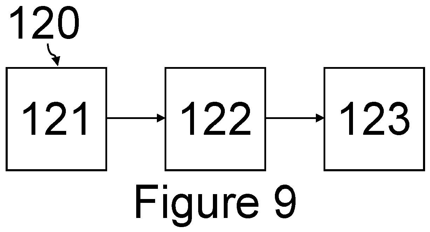

The method and system described above can be modified for use with a soil surface and/or subterranean area. Figure 9 illustrates a flowchart depicting a method 120 for monitoring the biodiversity of an area which may comprise a soil surface and/or a subterranean area. The method comprises the steps of: obtaining, 121, one or more recordings of terranean vibrations in the subterranean area; identifying, 122, using a trained machine learning model, each species of soil dwelling organism in the one or more recordings of terranean vibrations in the subterranean area and thereby obtaining an indication of each species of soil dwelling organisms in the subterranean area; and outputting, 123, an indication of biodiversity of the subterranean area based on the indication of each species of soil dwelling organism identified in the subterranean area.

The same principle which is applied to birds may be applied to other organisms, such as bats or farm livestock, or soil dwelling organisms. In particular, the sounds generated by soil dwelling organisms (e.g. using organs specifically for vocalisation or stridulation, by feeding on other organisms, or by moving other media, for example, moving through the earth) may be indicative of their presence. Therefore, by recording the sounds generated by soil dwelling organisms, the method provides a means of identifying, using a trained machine learning model, the species of soil dwelling organisms within audio range of an apparatus for executing the method.

The systems described above, for example, those illustrated schematically in Figures 2 and 3, may be used to perform the aforementioned method 120 for monitoring the biodiversity of an area. In such instances, the microphone of the recording device may be disposed close to or in contact with, or within, the ground to thereby improve the acoustic coupling between the ground (within which sounds indicative of particular soil dwelling organisms may propagate) and the microphone.

The change in the indication of biodiversity may be based solely on the proposed change to the area. For example, proposed change to the increase an amount of food provided by a food source then the change in biodiversity may increase because there is reduced competition for the food.

The change in the indication of biodiversity may be based on the proposed change to the area and on an indication of biodiversity of the area. For example, the proposed change of the introduction of a predator to the area there may be no affect on the indication of biodiversity if the indication of biodiversity indicates that there are no species of bird present which are predated by the predator.

The training data may comprise a plurality of recordings of bird vocalisation wherein each recording comprises a label indicating the species of bird singing the song. In examples, a plurality of recordings may be provided for each species - typically a minimum of 50.

Methods herein may comprise a step of pre-processing audio recordings. The pre-processed audio recordings may be used to train a machine learning model, or to improve the speed and or accuracy of recognition of birdsong in an audio recording by an already trained machine learning model. For example, removing frequency components of the recordings which do not contain useful information e.g. frequencies above and below the vocalisation range of birds, such as below 1000 Hz, and/or compression of the audio recordings to improve transmission speed (e.g. when sending the recording from the recording device to the computing device) and/or computational speed of the trained machine learning model (e.g. to reduce the time it takes the trained machine learning model to provide an output). For example, recording devices described herein may be configured to pre-process audio recordings before sending to computing devices which store the trained machine learning model and/or computing devices may be configured to pre-process audio recordings before inputting into the trained machine learning model. In some examples, pre-processing the audio recordings may comprise converting clips of the audio recordings into an image format (such as a Mel spectrogram) for processing by the trained machine learning model.

Soil dwelling organisms may be audible in a frequency range of 50 Hz to 2500 Hz. To date the inventors have determined that there are at least 23 acoustically distinct groups of soil dwelling organisms.

Birds may be audible in a frequency range of 50 Hz to 28000 Hz, for example 1000 Hz to 28000 Hz. To date the inventors have trained the algorithm to determine at least 145 acoustically distinct groups (species) of birds.

Other non-birds may be audible in the frequency range of 50 Hz to 28000 Hz. For example, farm equipment, farm animals, farm machinery and farm workers. These noises may be identified by the trained machine learning models and will not contribute to the determined indication of biodiversity. Advantageously, this enables noises which might otherwise be false identifications of bird species (whose calls sound like non-bird noises) to be filtered out.

An example method of pre-processing audio recordings is now described. This method of pre-processing may be used to train a machine learning model to recognise birdsong in a sound recording. Additionally, or alternatively, elements of the pre-processing may be performed for each recording before it is fed into the machine learning model for processing/identification, such as for the identification of different species of bird or subterranean organism.

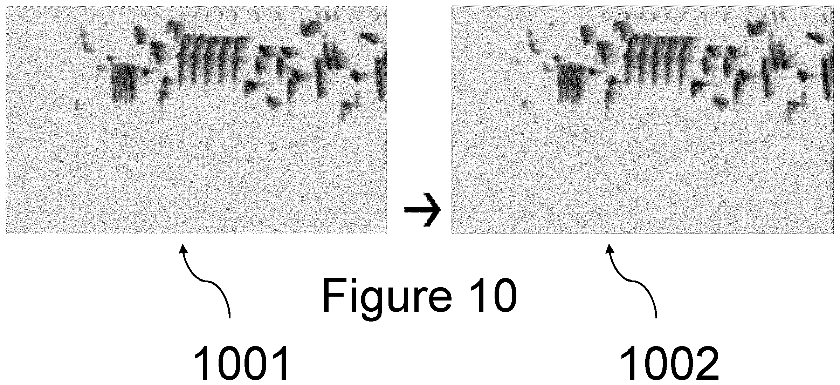

First the audio files are cut into clips of the same duration, such as 5s. Noise reduction may then be applied to each clip (once with a relatively lower reduction rate and once with a relatively higher reduction rate). The two audio recordings (one processed with the relatively lower reduction rate and one processed with the relatively higher reduction rate) may then be converted into Mel spectrograms and added together to provide a highlighted sound visual 1001 as shown in Fig. 10. A check noise function may then be applied to each slip to determine if there is any bird sound in the 5s clip - if there is no bird sound then this clip is discarded. A high pass filter may then be applied to the clip to remove low frequency noise, for example below 1000 Hz. A plurality of different forms of the same spectrogram may then be formed (for example, three), based on different parameters such as the number of Mel bands, hop length and FFT window. These may then be merged as shown in Fig. 10 to produce an RGB image 1002, with each channel providing different information about the sound. Each image may then be scaled and threshold techniques may be applied to separate the sound from the background.

In some examples, the pre-processing further comprises manually cleaning the audio recordings to only contain a recording of one birdsong. The images may then be inverted (from white black to black white) and fed to the model for training. In some examples, augmentations (or created or fictional recordings) may also be fed to the model - for example, where the recording changes in volume (e.g., from loud to quiet, or quiet to loud) to recreate a bird flying past.

In addition, some non-bird data sounds/recordings may be fed into the model. These may comprise: (1) human speech (for example, in English), (2) human non-speech (such as claps, whistles, sneezing, walking, laughing), (3) other animal sounds (e.g., cat, dog, sheep, cow, chicken, frog), (4) exterior noises (e.g., machines, loud noises) and (5) other noises (e.g., wind, river). The use of these non-bird data sounds/recordings (particularly those that are commonly heard on a farm in the UK) may help reduce the presence of false positives or false identifications of birds that are not actually present.

In examples, the biodiversity score of an area may be identical to the indication of biodiversity of the area. This in turn may corresponding to the species list or list of different species identified for that area.

As noted above, a machine learning model, such as a deep learning machine learning network may be used to generate the trained machine learning model. Based on a set of recordings of bird vocalisations with associated labels (e.g. wherein the labels indicate the species of the bird making a given bird vocalisation) an algorithm can generate a trained model. In use, the algorithm receives a test recording (e.g. the one or more recordings described herein) and the test recording is compared against the trained model. Based on the comparison the algorithm determines if the test recording comprises bird vocalisations similar to any of those in the labelled set and if so, determines that the vocalisation was generated by a bird of the same type as that indicated in the label. In the present example, the machine learning algorithm determines whether a recording comprises a bird vocalisation and if so identifies the bird making said vocalisation.

In some examples, to improve the accuracy of the model, an occurrence mask may be used. The occurrence mask may check whether selected bird species could appear in certain locations during specific times of the year. In such examples, it will be appreciated that location data regarding the location (which may be in the form of latitude and longitude) of the recording may be obtained and input as a parameter into the model, in addition to time and date information indicating when the recording was obtained. This information may then be used for example in a lookup table to obtain a list of possible species of bird that may be present at that location at that time. In some examples, the list of possible species of bird may be configured to cover the UK and Republic of Ireland over the course of a year. In other examples different geographies' lists may be chosen. The model may then use this information to obtain a "white list" of possible bird species that could be present at the time of the recording, and any species that are identified in a recording that are not on the white list may be removed.

In the context of the present disclosure, terranean vibrations refers to any vibrations, such as sound waves (e.g. mechanical rarefaction and compression) travelling through the ground including any of below ground and along the surface of the ground.

In examples, which comprise identifying a number of birds (or other animals) of a given species in an area, instead these examples may comprise identifying an estimate of a number of birds of a given species in the area. This may be based on a number of individuals identified and supplementary data (e.g. that given birds typically are found in groups of a selected or a particular geographic area at a particular time of year).

Figure 11 illustrates an example trophic diagram (which in this example is a pyramid) that may be output as an indication of general biodiversity in an area.

A more detailed indicator of wider biodiversity is achieved by allocating each detected species to a trophic zone. These are defined in by three sets of variables:
1. Trophic layer
   Carnivore = species obtaining at least 70% of food resources by consuming live invertebrate or vertebrate animals
   Herbivore = species obtaining at least 70% of food resources from plants
   Omnivore = species obtaining resources from multiple trophic level in roughly equal proportion
2. Trophic niche
   Carnivore niches:
      Invertivore = species obtaining at least 60% of food resources from invertebrates in terrestrial systems, including insects, worms, arachnids, etc.
      Vertivore = species obtaining at least 60% of food resources from vertebrate animals in terrestrial systems, including mammals, birds, reptiles etc.
      Scavenger = species obtaining at least 60% of food resources from carrion, offal or refuse;
   Herbivore niches:
      Frugivore = species obtaining at least 60% of food resources from fruit;
      Granivore = species obtaining at least 60% of food resources from seeds or nuts;
      Nectarivore = species obtaining at least 60% of food resources from nectar;
      Other Herbivore terrestrial = species obtaining at least 60% of food resources from other plant materials in non-aquatic systems, including leaves, buds, whole flowers etc.
      Herbivore aquatic = species obtaining at least 60% of food resources from plant materials in aquatic systems, including algae and aquatic plant leaves
      Aquatic Predator = species obtaining at least 60% of food resources from vertebrate and invertebrate animals in aquatic systems, including fish, crustacea, molluscs, etc
3. Trophic substrate:
   Aerial = species spends much of the time in flight, and hunts or forages predominantly on the wing
   Terrestrial = species spends majority of its time on the ground, where it obtains food while either walking or hopping (note this includes species that also wade in water with their body raised above the water)
   Insessorial = species spends much of the time perching above the ground, either in branches of trees and other vegetation (i.e. arboreal), or on other raised substrates including rocks, buildings, posts, and wires
   Aquatic = species spends much of the time sitting on water, and obtains food while afloat or when diving under the water's surface
   General = species has no primary lifestyle because it spends time in different substrate

The bird species richness of an area may be used to indicate a measure of wider biodiversity.

High bird species richness indicates high general biodiversity of the area, as a wider range of bird species can be supported if there is a wider range of:
1. plant species which provide nesting material and cover from weather/climate conditions and predation
2. plant species with seeds, leaves or fruits for bird diet
3. animal prey species (vertebrate and invertebrate)

As noted above, in some examples obtaining an indication of the richness of an entire class of organisms may comprise obtaining an indication of the richness of different trophic levels of the class of organism, and wherein outputting an indication of the general biodiversity comprises outputting an indication of the biodiversity of each trophic level.

In the example shown in Figure 11, the indication of the richness of different trophic levels of the aves (bird) class of organisms is shown for a particular assemblage (on a single farm) 1102 compared to a benchmark assemblage 1101 (it will be understood that the benchmark assemblage may be selected as described above) in the form of a trophic diagram. It can be seen for the selected assemblage 1102 there are three trophic levels for the aves class of organism, with there being a greater richness (i.e., greater number of species) for each identified trophic level (tertiary consumers, secondary consumers and primary consumers) compared to the benchmark assemblage.

In some examples, the recording of bird vocalisation also comprises sounds produced by other animals (either terranean or subterranean). In such examples, an indication of the richness of a plurality of different types of organisms may be obtained, for example to give an indication of the soil health which may be comprised of plants and their root systems, associated fungi and terranean/sub-terranean or soil-based organisms, such as worms for example. The richness of these other types of organisms may also be shown or provided as part of a trophic diagram, for example as a distinct level of the trophic diagram. In such examples the indication of general biodiversity of the area may be based on the indication of the richness of the plurality of different types of organisms.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any processors used in the computer system (and any of the activities and apparatus outlined herein) may be implemented with fixed logic such as assemblies of logic gates or programmable logic such as software and/or computer program instructions executed by a processor. The computer system may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

It will be appreciated from the discussion above that the embodiments shown in the Figures are merely exemplary, and include features which may be generalised, removed or replaced as described herein and as set out in the claims. In the context of the present disclosure other examples and variations of the apparatus and methods described herein will be apparent to a person of skill in the art.

## Claims

1. A method for monitoring the biodiversity of an area, the method comprising:
obtaining one or more recordings of bird vocalisation in the area;
identifying, using a trained machine learning model, each species of bird in the one or more recordings of bird vocalisation in the area and thereby obtaining an indication of each species of bird in the area;
outputting an indication of biodiversity of the area based on the indication of each species of bird in the area; and
providing an alert or notification in the event that the indication of biodiversity is above a selected threshold.

2. The method of claim 1, comprising:
obtaining an indication of the richness of an entire class of organisms in the area based on the indication of each species of bird in the area; and,
outputting an indication of the general biodiversity of the area based on the indication of richness of the entire class of organisms in the area;
wherein the indication of biodiversity is an indication of the general biodiversity of the area.

3. The method of claim 2 or 3 wherein obtaining an indication of the richness of an entire class of organisms comprises obtaining an indication of the richness of different trophic levels of the class of organism, and wherein outputting an indication of the general biodiversity comprises outputting an indication of the biodiversity of each trophic level.

4. The method of any of the previous claims further comprising:
identifying, using the trained machine learning model, the number of birds of each species of bird in the one or more recordings of bird vocalisation in the area, and thereby obtaining an indication of the abundance of each species of bird; and,
outputting an indication of biodiversity of the area further based on the indication of the abundance of each species of bird in the area.

5. The method of any of the previous claims, wherein:
each of the one or more recordings (i) has a given duration, and/or (ii) is recorded at a selected time of day.

6. The method of any of claims 1 to 5, comprising:
determining a change in the indication of biodiversity in the area based on a proposed change to the area.

7. A system for monitoring biodiversity of an area, the system comprising:
a recording device; and
a computing device;
wherein the recording device is configured to obtain one or more recordings of bird vocalisation in the area; and
wherein the computing device is configured to:
identify, using a trained machine learning model, each species of bird in the one or more recordings of bird vocalisation in the area and thereby obtaining an indication of each species of bird in the area;
output an indication of biodiversity of the area based on the indication of each species of bird in the area;
determine whether the output indication of biodiversity of the area is above a selected threshold, and in the event that the indication of biodiversity is above the selected threshold, to provide an alert or notification.

8. The system of claim 7 further comprising a display, and wherein the alert is provided on the display.

9. The system of claim 7 or 8 wherein the alert is a warning to visitors not to enter the area.

10. The system of any of claims 7 to 9 wherein the computing device is configured to:
obtain an indication of the richness of an entire class of organisms in the area based on the indication of each species of bird in the area; and,
output an indication of the general biodiversity of the area based on the indication of richness of the entire class of organisms in the area;
wherein the indication of biodiversity is an indication of the general biodiversity of the area.

11. The system of any of claims 7 to 10 wherein the computing device is configured to:
obtain an indication of the richness of an entire class of organisms comprises obtaining an indication of the richness of different trophic levels of the class of organism, and
wherein outputting an indication of the general biodiversity comprises outputting an indication of the biodiversity of each trophic level.

12. The system of any of claims 7 to 11 wherein the computing device is configured to:
identify, using the trained machine learning model, the number of birds of each species of bird in the one or more recordings of bird vocalisation in the area, and thereby obtaining an indication of the abundance of each species of bird; and,
output an indication of biodiversity of the area further based on the indication of the abundance of each species of bird in the area.

13. A computer readable non-transitory storage medium comprising a program for a computer configured to cause a processor to perform the method of any of the preceding claims.
